Europäisches Patentamt

European Patent Office

Office européen des brevets

(11) Publication number: **0 221 656**
A2

# EUROPEAN PATENT APPLICATION

(21) Application number: 86307162.7

(22) Date of filing: 17.09.86

(51) Int. Cl.⁴: **C 07 F 9/10**
A 21 D 2/16, A 21 D 2/32
A 23 L 1/035

(30) Priority: 19.09.85 JP 207313/85

(43) Date of publication of application:
13.05.87 Bulletin 87/20

(84) Designated Contracting States:
DE FR GB

(71) Applicant: KYOWA HAKKO KOGYO CO., LTD.
Ohtemachi Bldg., 6-1 Ohtemachi I-chome
Chiyoda-ku Tokyo 100(JP)

(72) Inventor: Matsuoka, Kasuhiro
1-18-20, Motoizumi
Komae-shi Tokyo(JP)

(72) Inventor: Mizusawa, Takao
6-21, Oojidai
Sakura-shi Chiba-ken(JP)

(74) Representative: Lambert, Hugh Richmond et al,
D. YOUNG & CO. 10 Staple Inn
London, WC1V 7RD(GB)

(54) Food modifier and a method for improving the quality of food using the same.

(57) An improved food modifier is disclosed for bread and other foodstuffs, the modifier comprising a mixture of (a) a phospholipid having a monoacyl glycerophospholipid content of 50 to 90 mol%, and (b) one or more of calcium stearyl lactate, sodium stearyl lactate and sucrose fatty acid ester. The food modifier is particularly used in the making of bread, sponges, coffee whitener and noodles.

EP 0 221 656 A2

# FOOD MODIFIER AND A METHOD FOR IMPROVING
# THE QUALITY OF FOOD USING THE SAME

This invention relates to a food modifier incorporating a fatty acid ester and a method for improving the quality of food using this modifier.

In the making of bread, glycerine fatty acid esters (including organic acid monoglycerides) are used for the purposes of imparting softness thereto, and calcium stearyl lactate or sodium stearyl lactate are used for the purposes of imparting machinability. It is also known that sucrose fatty acid esters have excellent foaming properties and are used for this purpose in the manufacture of sponge cakes in combination with glycerine fatty acid esters which have excellent emulsifying properties.

Lecithin and glycerine fatty acid esters are also used in margarine, as are phospholipids having a monoacyl glycerophospholipid content of 15 to 70%, see for example British Patent GB-A-1,215,868.

Lecithin is also used in chocolate, whilst lecithin, sucrose fatty acid esters, glycerine fatty acid esters and sodium stearyl lactate are used in coffee whiteners.

From this description it will be seen that the choice of an emulsifier depends largely upon the kind of foodstuff and that no common food modifier yet exists.

According to the present invention, a general purpose food modifier has been developed which can be used to improve bread dough and a wide range of other food products. This food modifier comprises a mixture of (a) a phospholipid (hereinafter referred to as EML) having a monoacyl glycerophospholipid content of from 50 to 90 mole percent, and (b) at least one of calcium stearyl lactate (hereinafter referred to as CSL), sodium stearyl lactate (hereinafter referred to as SSL) and sucrose fatty acid ester (hereinafter referred to as SE).

The EML used in the present invention may be obtained by, for example, the method described in GB-A-1,215,868. Preferably the EML, obtained for example, by the method set forth in the Reference Example hereinafter described, is used in the form of paste, the water content of which is not more than 0.5%. As CSL, SSL, and SE, those commercially available are used. The mixing ratio of CSL or SSL to EML is preferably 1 part by weight per 0.1 to 4 parts by weight of EML. The mixing ratio of SE to EML is preferably 1 part by weight per 0.2 to 2 parts by weight of EML.

It is preferred that the food modifier of the present invention be incorporated in foodstuffs in an amount of not more than 1%, preferably 0.05 to 1%, by weight based on the weight of the foodstuffs.

The food modifier of the present invention is used in the preparation of various foods and is particularly excellent in improving the quality of bread, sponge cake, coffee whitener (non-dairy creamer) or noodles.

The synergistic effect of the compositions of this invention is illustrated by the following examples.

EXAMPLE 1

A bread baking test was carried out according to the details set out in Table 1. In this test the bread was made by the 70% soft sponge method wherein a sponge mix is first prepared, allowed to ferment, then mixed with a dough mix, subjected to proofing and then baked.

The results of organoleptic tests, carried out on bread made by this method, are shown in Table 2.

TABLE 1

| Raw Material | Sponge (g) | Dough (g) | Total (g) | Procedure |
|---|---|---|---|---|
| Wheat flour (Hard wheat flour) | 700 | 300 | 1000 | Sponge mixing<br>  Low 2 mins.<br>  Moderate 1 min. |
| Sugar | ' | 50 | 50 | Dough temperature<br>  24°C |
| Salt | | 20 | 20 | |
| Shortening | | 50 | 50 | Sponge fermentation<br>  4 hrs |
| Yeast | 20 | | 20 | Dough mixing<br>  Floor time 20 mins. |
| Yeast food | 0.1 | | 0.1 | Bench time 15 mins. |
| CSL | Table 2 | | | Proofing time<br>  until rising over the upper |
| EML-No. 2 obtained in Reference Example | Table 2 | | | edge of the pan by 1.5 cm.<br>(38°C, 85% RH)<br><br>Baking time<br>  (200°C) 25 mins. |
| Water | 400 | 240 | 640 | |

TABLE 2

| C | A / B | 0 | 0.05 | 0.1 | 0.2 | 0.3 | 0.4 | 0.5 |
|---|---|---|---|---|---|---|---|---|
| 0 | Operability | ± | ± | ± | + | + | ± | ± |
| | Product evaluation | ± | ± | ± | + | + | ± | ± |
| | Softness | ± | ± | ± | + | + | ± | ± |
| 0.1 | Operability | + | ++ | ++ | +++ | +++ | ++ | + |
| | Product evaluation | + | ++ | ++ | +++ | +++ | ++ | + |
| | Softness | + | ++ | ++ | +++ | +++ | ++ | + |
| 0.2 | Operability | ++ | ++ | +++ | +++ | +++ | ++ | + |
| | Product evaluation | ++ | ++ | +++ | +++ | +++ | ++ | + |
| | Softness | ++ | ++ | +++ | +++ | +++ | ++ | + |
| 0.3 | Operability | ++ | +++ | +++ | +++ | +++ | ++ | + |
| | Product evaluation | ++ | +++ | +++ | +++ | +++ | ++ | + |
| | Softness | ++ | +++ | +++ | +++ | +++ | ++ | + |
| 0.4 | Operability | ++ | +++ | +++ | +++ | +++ | ++ | + |
| | Product evaluation | ++ | +++ | +++ | +++ | +++ | ++ | + |
| | Softness | ++ | +++ | +++ | +++ | +++ | ++ | + |
| 0.5 | Operability | ++ | +++ | +++ | +++ | +++ | ++ | + |
| | Product evaluation | ++ | +++ | +++ | +++ | +++ | ++ | + |
| | Softness | ++ | +++ | +++ | +++ | +++ | ++ | + |

A: EML-No. 2 obtained in Reference Example, percent relative to wheat flour

B: Evaluation for breadmaking

C: CSL, percent relative to wheat flour

Standard for evaluation: ±  normal,   +  fairly good,

++  good,   +++  excellent

As for the combination of EML and CSL, the preferred range of the weight percent of EML is 0.05 to 0.4 and the preferred range of the weight percent of CSL is 0.1 to 0.5.

4

0221656

EXAMPLE 2

Bread was made using a recipe shown in Table 3. The results of organoleptic tests on this bread are shown in Table 4.

TABLE 3

| Raw Material | Sponge (g) | Dough (g) | Total (g) | Procedure |
|---|---|---|---|---|
| Wheat flour (Hard wheat flour) | 700 | 300 | 1000 | |
| Sugar | | 50 | 50 | |
| Salt | | 20 | 20 | Same as in Table 1 |
| Shortening | | 50 | 50 | |
| Yeast | 20 | | 20 | |
| Yeast food | 1 | | 1 | |
| Modifier * | Table 4 | | | |
| Water | 400 | 240 | 640 | |

* CSL, SSL, or CSL + SSL and EML obtained as in the Reference Example

TABLE 4

| E | D | C | A / B / 0 | EML-No. 1 | EML-No. 2 | EML-No. 3 | EML-No. 4 |
|---|---|---|---|---|---|---|---|
| | | | | | 0.2 | | |
| | 0 | Operability | ± | + | + | + | + |
| | | Product evaluation | ± | + | + | + | + |
| | | Softness | ± | + | + | + | + |
| CSL | 0.2 | Operability | + | + | ++ | +++ | +++ |
| | | Product evaluation | + | + | ++ | +++ | +++ |
| | | Softness | + | + | ++ | +++ | +++ |
| SSL | 0.2 | Operability | + | + | ++ | +++ | +++ |
| | | Product evaluation | + | + | ++ | +++ | +++ |
| | | Softness | + | + | ++ | +++ | +++ |
| CSL + SSL (1:1) | 0.2 | Operability | + | + | ++ | +++ | +++ |
| | | Product evaluation | + | + | ++ | +++ | +++ |
| | | Softness | + | + | ++ | +++ | +++ |

A:    EML

B:    Amount, percent relative to wheat flour

C:    Evaluation of product

D:    Amount, percent relative to wheat flour

E:    Modifier component (B)

Standard for evaluation: same as in Table 2

As is apparent from Table 4, the combinations of EML-No. 2 to No. 4 and CSL, SSL or CSL + SSL are excellent.

EXAMPLE 3

Sponge cake was baked using a recipe shown in Table 5. The results of organoleptic tests on the resulting sponge cake are shown in Table 6.

## TABLE 5

| Raw Material | Amount Formulated (g) | Procedure |
|---|---|---|
| Wheat flour (soft wheat flour | 1000 | Mixer: using whipper |
| Egg | 1000 | Specific gravity of dough: 0.40 to 0.45 |
| Sugar | 1000 | Baking: 200°C, 25 mins. |
| Baking powder | 30 | |
| Modifier * | Table 6 | |

\*      SE or SE + MG \*\* (1:1) and EML obtained as in Reference Example

\*\*      Glycerine fatty acid ester

## TABLE 6

| E | D | C | A / B | 0 | EML-No. 1 | EML-No. 2 | EML-No. 3 | EML-No. 4 |
|---|---|---|---|---|---|---|---|---|
| | | | | | | 0.4 | | |
| | 0 | Volume | | − | ± | + | + | + |
| | 0 | Inner phase | | − | ± | + | + | + |
| | 0 | Texture | | − | ± | + | + | + |
| SE | 0.4 | Volume | | ± | + | ++ | +++ | +++ |
| SE | 0.4 | Inner phase | | ± | + | ++ | +++ | +++ |
| SE | 0.4 | Texture | | ± | + | ++ | +++ | +++ |
| SE + MG (1:1) | 0.4 | Volume | | + | ++ | ++ | +++ | +++ |
| SE + MG (1:1) | 0.4 | Inner phase | | + | ++ | ++ | +++ | +++ |
| SE + MG (1:1) | 0.4 | Texture | | + | ++ | ++ | +++ | +++ |

A: EML

B: Amount, percent relative to wheat flour

C: Evaluation of product

D: Amount, percent relative to wheat flour

E: Modifier component (B)

Standard for evaluation:   -   poor      ±   normal,

+   fairly good,   ++   good,

+++   excellent

As is apparent from Table 6, the combinations of EML-No. 2 to No. 4 and SE or SE + MG are excellent.

EXAMPLE 4

Coffee whitener was prepared using a recipe shown in Table 7.

## TABLE 7

| Raw Material \ Test Group | I (%) | II (%) | III (%) | IV (%) | V (%) | Procedure |
|---|---|---|---|---|---|---|
| Palm Oil | 39.0 | 39.0 | 39.0 | 39.0 | 39.0 | 1. Preliminary emulsification (70°C, 50 mins) |
| Skim milk | 3.0 | 3.0 | 3.0 | 3.0 | 3.0 | |
| Casein Na | 4.0 | 4.0 | 4.0 | 4.0 | 4.0 | 2. Sterilization (14°C, 4-5 secs.) |
| Water | 54.0 | 53.7 | 53.7 | 53.7 | 53.7 | 3. Cooling (20°C) |
| Modifier | 0 | | | | | 4. Homogenization by homogenizer primary 60kg/cm² (60°C) |
| SSL | | 0.3 | | | | |
| EML-No. 2 | | | 0.3 | | | secondary 50kg/cm² (60°C) |
| SSL+EML-No. 2 (1:1) | | | | 0.3 | | |
| SSL+EML-No. 4 (1:1) | | | | | 0.3 | 5. Cooling (20°C) |

The following tests were carried out on the resulting product.

1.    Vibration Resistance Test

50 g of the coffee whitener were placed in a test tube with a stopper. After shaking with a shaker (200 rpm) for one minute, the amount of oil separation was observed.  The results are shown in Table 8.

TABLE 8

| Test Group | Oil Separation |
| --- | --- |
| I | Occurred |
| II - V | None occurred |

2.    Heat Resistance Test

10 g of the coffee whitener were placed in a beaker and the top of the beaker was covered with foodstuffs-packing film.  The whitener was heated at 60°C for one hour and then cooled to 5°C.  The amount of oil separation was observed.  The results are shown in Table 9.

TABLE 9

| Test Group | Oil Separation |
| --- | --- |
| I | Occurred |
| II and III | Some occurred |
| IV and V | None occurred |

3.    Acid Resistance Test

Coffee (pH 4.7) was made using commercially available coffee beans (Kilimanjaro) by a filter method.

To 100 cc of this coffee was added 6 g of the coffee whitener.  After mixing, the amount of oil separation was observed.  The results are shown in Table 10.

TABLE 10

| Test Group | Oil Separation |
| --- | --- |
| I and II | Occurred |
| III | Some occurred |
| IV and V | None occurred |

EXAMPLE 5

Noodles were prepared with a recipe shown in Table 11.

## TABLE 11

| Raw Material \ Test Group | I (%) | II (%) | III (%) | IV (%) | V (%) | Procedure |
|---|---|---|---|---|---|---|
| Wheat flour for noodle * | 100 | 100 | 100 | 100 | 100 | Mixing time: 13.5 mins. |
| Salt | 1.5 | 1.5 | 1.5 | 1.5 | 1.5 | Cutting sword: No. 12 |
| Water | 34 | 34 | 34 | 34 | 34 | |
| Modifier | 0 | | | | | Boiling time: 20 mins. |
| CSL | | 0.4 | | | | |
| EML-No. 2 | | | 0.4 | | | |
| CSL+EML-No. 2 (1:1) | | | | 0.15 +0.2 | | |
| CSL+EML-No. 4 (1:1) | | | | | 0.15 +0.2 | |

* Ash content: 0.43%, moisture content: 14.6%, wet gluten: 19.2%.

The quality of noodles after boiling was tested and the results are given in Table 12.

## TABLE 12

| Test Item | Test Group | | | | |
|---|---|---|---|---|---|
| | I | II | III | IV | V |
| Weight increase (%) *1 | 223.4 | 225.2 | 225.0 | 228.9 | 229.2 |
| Elongation rate (%) *2 | 173 | 164 | 158 | 143 | 141 |
| Colour phase | ± | ± | ± | ++ | ++ |
| State of noodle | ± | − | + | +++ | +++ |
| Texture | ± | + | + | +++ | +++ |

Standard for evaluation:   -   poor          ±   normal,

                         +   fairly good,      ++   good,

                      +++   excellent

*1    $\dfrac{\text{Weight after boiling}}{\text{Weight before boiling}} \times 100(\%)$

*2    $\dfrac{\text{Length after boiling}}{\text{Length before boiling}} \times 100(\%)$

As is apparent from the Table, test groups IV and V are excellent.

REFERENCE EXAMPLE (Preparation of EML)

20 mM of calcium chloride was added to 1000 ml of a 15% (w/w) aqueous dispersion of soybean lecithin, and then 3000 mg (1260 U) of phospholipase A was added thereto, followed by incubation at pH 9.0 and 55°C for 1 to 13 hours. Every 1, 3, 6 and 13 hours, water was distilled off by condensation under reduced pressure to prepare samples shown in Table 13.

TABLE 13

| Sample | Reaction time (hour) | Monoacyl glycero-phospholipid in phospholipid (mol%)* | Emulsifying Property |
|---|---|---|---|
| EML-No. 1 | 1 | 41 | + |
| EML-No. 2 | 3 | 52 | ++ |
| EML-No. 3 | 6 | 64 | +++ |
| EML-No. 4 | 13 | 82 | +++ |

Standard for evaluation:  +   fairly good,      ++   good,

                      +++   excellent

  *   EML is dissolved in a chloroform-methanol solvent mixture.

In the above Table the monoacyl glycerophospholipid content was obtained by separating the EML solution by thin layer chromatography according to the method described in J. Sci. Food Agric., Vol. 30, page 1131 (1979). Spots of diacyl glycerophospholipids and spots of monoacyl glycerophospholipids were combined, respectively, each of which was quantitatively determined as inorganic phosphorus to determine the phospholipid content. The monoacyl glycerophospholipid content was expressed as mol% of the total phospholipids.

The food modifier of the present invention exhibits an excellent emulsifying force and is an excellent modifier for improving the quality of the doughs, the finally baked product, and other foodstuffs.

## CLAIMS

1. A phospholipid food modifier containing a phospholipid having a monoacyl glycerophospholipid content of from 50 to 90 mol%, characterised in that the modifier contains in admixture with the phospholipid one or more of caclium stearyl lactate, sodium stearyl lactate and sucrose fatty acid ester.

2. A modifier according to claim 1, comprising a mixture of calcium stearyl lactate (CSL) or sodium stearyl lactate (SSL) and said phospholipid in a weight ratio of 1 part by weight CSL or SSL based on 0.1 to 4 parts by weight of the phospholipid.

3. A modifier according to claim 1, comprising a mixture of sucrose fatty acid ester (SE) and said phospholipid in a weight ratio of 1 part by weight SE based on 0.2 to 2 parts by weight of the phospholipid.

4. A method for improving the quality of a foodstuff which comprises incorporating into the foodstuff a food modifier comprising a phospholipid having a monoacyl glycerophospholipid content of from 50 to 90 mol%, characterised in that the phospholipid is used in combination with one or more of calcium stearyl lactate, sodium stearyl lactate and sucrose fatty acid ester.

5. A method according to claim 4, wherein the food modifier is incorporated into the foodstuff in an amount of not more than 1% by weight.

6. A method according to claim 4 or 5, characterised in that the phospholipid is used in combination with calcium stearyl lactate (CSL) or sodium stearyl lactate (SSL) at a weight ratio of 1 part CSL or SSL to 0.1 to 4 parts phospholipid.

7. A method according to claim 4 or 5, characterised in that the phospholipid is used in combination with a sucrose fatty acid ester (SE) at a weight ratio of 1 part SE to 0.2 to 2 parts phospholipid.

8.     A method according to any one of claims 4-7, wherein the foodstuff is bread, sponge cake, coffee whitener or noodles.

9.     A modified food composition comprising a foodstuff and a food modifier comprising a phospholipid having a monoacyl glycerophospholipid content of from 50 to 90 mol%, characterised in that the modifier also contains one or more of calcium stearyl lactate, sodium stearyl lactate and sucrose fatty acid ester, the amount of said food modifier being not more than 1% by weight.

10.     A modified food composition according to claim 9, wherein the foodstuff is bread, sponge cake, coffee whitener or noodles.